# DEMANDE DE BREVET EUROPEEN

(11) **EP 4 368 013 A1**
(43) Date de publication de la demande: **15.05.2024**
(21) Numéro de dépôt: 23206462.6
(22) Date de dépôt: 27.10.2023
(51) Int. Cl.: A01G 3/037, B26B 15/00

(54) **ENSEMBLE POUR LA PRÉVENTION DES BLESSURES COMPORTANT UN OUTIL ÉLECTROPORTATIF ET UN ACCESSOIRE PORTABLE**

(30) Priorité: 08.11.2022 FR 2211593
(71) Demandeur: Mage Application, 38640 Claix (FR)
(72) Inventeur: LORINI, Marcel, 69126 Brindas (FR)
(74) Mandataire: Schmidt, Martin Peter

(57) **Abrégé**

Un ensemble qui comporte :
- un outil électroportatif (100) comportant un moyen d'entrainement configuré pour déplacer deux lames ou deux mâchoires entre une position ouverte et une position fermée,
- un accessoire portable (200) destiné à être porté par l'utilisateur sur un membre distinct du bras de l'utilisateur portant l'outil,
- un moyen d'estimation d'une valeur représentative de la distance (D1) séparant l'accessoire portable et l'outil électroportatif, et en ce que les lames ou mâchoires sont déplacées ou maintenues en position ouverte à moins que chacune des conditions suivantes soient satisfaites :
- la valeur représentative de la distance (D1) séparant l'accessoire portable et l'outil électroportatif est inférieure à un seuil prédéterminé, dit seuil d'activation,
- la valeur représentative de la distance (D1) séparant l'accessoire portable et l'outil électroportatif est supérieure à un seuil prédéterminé, dit seuil de sécurité.

## Description

### DOMAINE TECHNIQUE DE L'INVENTION

La présente invention vise un ensemble, comportant un outil électroportatif et un accessoire portable, qui permet la prévention du risque de blessures et en particulier la prévention de blessure accidentelle d'un membre portant l'accessoire portable par une lame ou une mâchoire dudit outil électroportatif. En particulier, l'invention vise un ensemble comportant un sécateur et vise à la prévention des mutilations accidentelles.

### ÉTAT DE LA TECHNIQUE

On désigne par outil électroportatif les outils pouvant être manipulés par un utilisateur à la main et transporté facilement. Un outil électroportatif est généralement de petite taille et de faible poids, par exemple moins de 10 kilogrammes. Un outil électroportatif est un outillage électriques dotés d'éléments dépendant d'une alimentation électrique sous forme de batterie associé présente sur l'outil ou alimentée par un câble d'alimentation électrique relié à une alimentation secteur ou à une source d'alimentation autonome.

Plus précisément, la présente demande de brevet concerne les outils électroportatifs comportant deux lames, ou deux mâchoires, mobiles entre une position ouverte et une position fermée. En tant qu'exemples non limitants d'outils appartenant à cette catégorie, on peut citer un sécateur, un outil de coupe de câble, un outil de sertissage, un outil de poinçonnage ou encore un outil de serrage de vis à tête fusible.

Ces outils présentent, en cas de contact des lames ou des mâchoires avec un membre (bras ou jambe) de l'utilisateur, des risques importants de blessure. Par exemple, la manipulation d'un sécateur tenu d'une seule main peut donner lieu très rapidement à l'amputation d'un doigt lors d'une opération de taille dans le cadre d'une exploitation agricole ou d'un jardinage domestique.

Divers systèmes de sécurité existent pour prévenir le risque de blessure. Du plus simple consistant à demander à l'utilisateur de maintenir sa main dans le dos, ou de l'y attacher, à des systèmes plus complexes visant à alerter de la proximité entre l'outil électroportatif et un accessoire de type bracelet ou bague porté par l'utilisateur sur sa main libre et/ou à stopper les lames en cas de proximité entre l'outil électroportatif et l'accessoire.

Par exemple, l'art antérieur connaît le système de sécurité pour sécateur décrit par la demande de brevet KR 10-2015-0035840 qui comporte une bague configurée pour générer un champ magnétique associé à un capteur positionné sur le sécateur pour détecter le champ magnétique ainsi généré. Ce même document KR 10-2015-0035840 et le document EP 3 967134 décrivent un bracelet ou une bague doté d'un émetteur-récepteur configuré pour échanger une onde électro-magnétique de type signal radio par exemple avec un émetteur disposé sur un sécateur, d'une sorte qu'une distance peut être calculée entre l'émetteur récepteur sur le sécateur et sur le bracelet et que le moteur du sécateur peut être arrêté par mesure de sécurité lorsque le bracelet et le sécateur se trouvent trop proches l'un de l'autre. L'art antérieur connaît également la demande de brevet EP 3 967 134 A1 qui décrit un système de sécurité pour sécateur comportant un gant conducteur, une source de tension électrique et un sécateur configuré pour que, en cas de contact avec les lames du sécateur et le gant conducteur, la détection d'un courant électrique permet l'arrêt d'urgence des lames du sécateur.

On souligne toutefois concernant chacun de ces systèmes qu'ils tendent à être ignoré par certains utilisateurs qui peuvent décider de simplement ne pas porter le l'accessoire de type bracelet ou gant. Outre la survenue de blessure, une telle négligence rend difficile l'attribution de responsabilité entre le fabricant de l'outil électroportatif, l'utilisateur et l'employeur de l'utilisateur le cas échéant.

### OBJETS DE L'INVENTION

La présente invention vise à remédier à tout ou partie des inconvénients des systèmes de sécurité visant à la prévention des blessures, et notamment à la prévention du risque de mutilation, lors de l'utilisation d'un outil électroportatif à lames ou à mâchoires.

À cet effet, selon un premier objet, la présente invention vise un ensemble qui comporte :
- un outil électroportatif comportant un moyen d'entrainement configuré pour déplacer deux lames ou deux mâchoires entre une position ouverte et une position fermée,
- un accessoire portable destiné à être porté par l'utilisateur sur un membre distinct du bras de l'utilisateur portant l'outil,
- un moyen d'estimation d'une valeur représentative de la distance séparant l'accessoire portable et l'outil électroportatif,
et dans lequel les lames ou mâchoires sont déplacées ou maintenues en position ouverte à moins que chacune des conditions suivantes soient satisfaites :
- la valeur représentative de la distance séparant l'accessoire portable et l'outil électroportatif est inférieure à un seuil prédéterminé, dit seuil d'activation,
- la valeur représentative de la distance séparant l'accessoire portable et l'outil électroportatif est supérieure à un seuil prédéterminé, dit seuil de sécurité.

À titre d'exemple, le seuil d'activation est une valeur de distance comprise entre 1 mètre et 2 mètres, préférentiellement entre 1 mètre et 1,5 mètres. À titre d'exemple, le seuil de sécurité est une valeur de distance comprise entre 10 centimètres et 50 centimètres, préférentiellement comprise entre 15 centimètres et 25 centimètres.

Dans ces conditions normales d'utilisation de l'ensemble objet l'invention, l'utilisateur porte sur lui un accessoire portable, qui se présente par exemple sous la forme d'un gant. L'accessoire portable est destiné à être porté sur un membre distinct de celui utilisé pour manipuler l'outil électroportatif. Préférentiellement, l'utilisateur porte l'accessoire portable sur une main et manipule l'outil électroportatif avec l'autre main.

L'ensemble objet de l'invention offre l'avantage d'assurer que le membre à protéger, par exemple la main ou le bras de l'utilisateur, ne se trouve pas trop proche de la source de danger, par exemple des lames de l'outil électroportatif. Si cette distance est trop courte, en deçà d'un seuil de sécurité, les lames ou mâchoires de l'outil sont ouvertes ou conservée ouvertes.

De plus, l'ensemble objet de l'invention offre l'avantage d'assurer que l'utilisateur utilise l'accessoire portable. Cette vérification est opérée en fonction de la distance entre le l'accessoire portable et l'outil électroportatif. Si cette distance est trop grande, au-delà d'un seuil d'activation, les lames ou mâchoires de l'outil sont ouvertes ou conservées ouverte.

Dans des modes de réalisation, la valeur représentative de la distance séparant l'accessoire portable et l'outil électroportatif est déterminée en fonction de la force d'un signal échangé entre une première antenne positionnée sur l'outil électroportatif et une deuxième antenne positionnée sur l'accessoire portable.

Dans des modes de réalisation, la distance séparant l'accessoire portable et l'outil électroportatif est déterminée par calcul d'un temps de transmission entre l'émission d'un signal électromagnétique et la réception dudit signal électromagnétique entre deux émetteurs-récepteurs respectivement positionnés sur l'accessoire portable et sur l'outil électroportatif.

Avantageusement, le signal électromagnétique échangé par les deux émetteurs-récepteurs respectivement positionnés sur l'accessoire portable et sur l'outil électroportatif est un signal électromagnétique de type ultra-large Bande (ULB).

Dans des modes de réalisation, l'ensemble comporte un moyen de vérification configuré pour estimer si l'accessoire portable est porté par un utilisateur. Avantageusement, une alarme est émise et/ou les lames ou mâchoires sont déplacées ou conservées en position ouverte à moins que le moyen de vérification estime que l'accessoire portable est en effet porté par un utilisateur. Avantageusement, l'alimentation électrique de l'outil électroportatif est coupée si le moyen de de vérification estime que l'accessoire portable n'est pas porté par un utilisateur.

Avantageusement, le moyen de vérification comporte un accéléromètre positionné sur l'accessoire portable et le moyen de vérification vérifie à intervalles réguliers que les données relevées par ledit accéléromètre sont représentatives d'un usage actif de l'accessoire portable.

Les données relevées représentatives d'un usage actif de l'accessoire portable sont par exemple des mesures d'accélération correspondant à un mouvement de va et vient à intervalles régulier, typique d'une opération de taille. On souligne que les données représentatives d'un usage actif de l'accessoire portable pourront être dépendantes du type d'outil électroportatif. Ainsi, un outil de coupe de câble, un outil de sertissage, un outil de poinçonnage et un outil de serrage de vis à tête fusible pourront être mises en sécurité en fonction de données représentatives d'un usage actif de l'accessoire portable qui leur sont propres. De même, les modalités de mise en sécurité par blocage des lames ou mâchoires, par ouverture des lames ou mâchoires ou par coupure de l'alimentation électrique pourront être spécifique pour chaque type d'appareil électroportatif.

Avantageusement, le moyen de vérification configuré pour estimer si l'accessoire portable est porté par un utilisateur est paramétré pour détecter une mauvaise utilisation de l'accessoire portable ou une utilisation non conforme avec les exigences de sécurité. Par exemple, le moyen de vérification est configuré pour estimer si l'accessoire portable est porté par un utilisateur comporte un accéléromètre paramétré pour détecter des données représentatives de la présence de l'accessoire portable dans la poche de l'utilisateur.

En cas de détection d'une mauvaise utilisation de l'accessoire portable ou une utilisation non conforme avec les exigences de sécurité par le moyen de vérification, l'appareil électroportatif peut être mis en sécurité par immobilisation ou ouverture des lames ou mâchoire, par émission d'une alarme ou par coupure de l'alimentation électrique de l'outil électroportatif.

Grâce à ces dispositions, l'ensemble offre une sécurité supplémentaire assurant que l'utilisateur porte l'accessoire portable, c'est-à-dire qu'il n'est pas simplement posé à proximité.

Dans des modes de réalisation, l'ensemble comporte un moyen de mesure d'une vitesse de mouvement d'une main de l'utilisateur et dans lequel le seuil de sécurité est déterminé en fonction de la vitesse de mouvement mesurée.

Avantageusement, le seuil de sécurité est déterminé à intervalles régulier, par exemple toutes les 10 secondes, au cours de l'utilisation de l'outil électroportatif.

Avantageusement, le moyen de mesure d'une vitesse de mouvement d'une main de l'utilisateur comporte au moins un accéléromètre positionné sur l'accessoire portable et/ou positionné sur l'outil électroportatif.

Grâce à ces dispositions, le seuil de sécurité qui correspond à la distance minimale, en deçà de laquelle le sécateur est mise en sécurité, peut être déterminée de manière dynamique en fonction du comportement de l'utilisateur. Par exemple, le seuil de sécurité sera augmenté lorsque le mouvement des mains de l'utilisateur est très rapide.

Dans des modes de réalisation, l'ensemble comporte une interface homme-machine configurée pour permettre à l'utilisateur de lever temporairement la sécurité de sorte que le moyen d'entrainement peut mettre en mouvement les lames ou mâchoires vers une position fermée sans vérification préalable des conditions de distance décrites plus haut. Préférentiellement, les données relatives à l'autorisation sont enregistrées dans une mémoire locale ou distante. Ces données correspondent par exemple à la date et l'heure de l'autorisation et à l'identité de l'utilisateur à l'origine de l'autorisation.

Grâce à ces dispositions, si l'utilisateur en fait le choix, la sécurité offerte par l'accessoire portable peut être levée temporairement. Cette autorisation est enregistrée dans une mémoire, de sorte que la responsabilité du fabricant peut être dégagée en cas d'accident.

Dans des modes de réalisation, l'ensemble comporte un moyen d'émission d'une alarme sonore ou visuelle positionné sur l'outil électroportatif ou positionné sur l'accessoire portable et ledit moyen émet une alarme lorsque la valeur représentative de la distance séparant le premier et le deuxième moyen d'émission ou de réception d'un signal électromagnétique est inférieure à un seuil prédéterminé, dit seuil d'alerte.

Grâce à ces dispositions, une indication supplémentaire est communiquée à l'utilisateur par l'intermédiaire d'une alarme qui se déclenche lorsque l'outil électroportatif et l'accessoire sont trop proches l'un de l'autre, sans pour autant nécessiter de bloquer le fonctionnement de l'outil électroportatif.

Dans des modes de réalisation, la première et la deuxième antenne sont configurées pour échanger un signal émis en radiofréquences, en infrarouge ou un signal selon le standard Bluetooth (marque déposée).

Dans des modes de réalisation, la première et la deuxième antenne sont configurées pour échanger un signal de type ultra-large Bande (ULB).

Grâce à ces dispositions, La mise en oeuvre d'un signal ULB permet une estimation d'une valeur représentative de la distance entre l'outil électroportatif et l'accessoire très rapide, avec une faible latence, avec une grande précision et occasionnant une faible consommation d'énergie.

Dans des modes de réalisation, l'ensemble comporte :
- au moins un accessoire portable supplémentaire et
- un moyen d'estimation d'une valeur représentative de la distance séparant l'accessoire portable supplémentaire et l'outil électroportatif,
et les lames ou mâchoires sont déplacées ou conservées en position ouverte à moins que la condition supplémentaire suivante soit satisfaite :
- la valeur représentative de la distance séparant l'accessoire portable supplémentaire et l'outil électroportatif est supérieure à un seuil prédéterminé.

Dans des modes de réalisation, la distance séparant l'accessoire portable supplémentaire et l'outil électroportatif est déterminée en fonction de la force d'un signal échangé entre la première antenne positionnée sur l'outil électroportatif et une troisième antenne positionnée sur l'accessoire portable. Dans des modes de réalisation, la distance séparant l'accessoire portable et l'outil électroportatif est déterminée par calcul d'un temps de transmission entre l'émission d'un signal électromagnétique et la réception dudit signal électromagnétique entre deux émetteurs-récepteurs respectivement positionnés sur l'accessoire portable supplémentaire et sur l'outil électroportatif.

De manière particulièrement avantageuse, plusieurs utilisateurs différents peuvent porter chacun un accessoire portable, vérifiant ainsi qu'une distance de sécurité est respectée entre l'outil électroportatif et chacun des utilisateurs porteurs de l'accessoire portable.

Dans des modes de réalisation, l'outil électroportatif est choisi parmi : un sécateur, un outil de coupe de câble, un outil de sertissage, un outil de poinçonnage ou un outil de serrage de vis à tête fusible.

Dans des modes de réalisation, l'accessoire portable est un bracelet, une bague ou un gant.

Dans des modes de réalisation, l'outil électroportatif est un sécateur comportant une contre-lame et une lame de coupe rendue mobile par un moyen d'entrainement. Avantageusement, le moyen d'entrainement comporte un moteur sans balais, un réducteur planétaire, un couple conique ou spiro-conique et un engrenage engagé avec la lame de coupe.

### BRÈVE DESCRIPTION DES FIGURES

D'autres avantages, buts et caractéristiques particulières de l'invention ressortiront de la description non limitative qui suit d'au moins un mode de réalisation particulier de l'ensemble objet de la présente invention, en regard des dessins annexés, dans lesquels :
[Fig 1] représente, schématiquement, un premier mode de réalisation particulier de l'ensemble objet de la présente invention comportant un accessoire portable sous forme de bracelet et un outil électroportatif de type sécateur,
[Fig 2] représente, schématiquement, en perspective et en vue éclatée, le détail de l'outil électroportatif du premier mode de réalisation,
[Fig 3] représente, schématiquement, en perspective et en vue éclatée, le détail de l'accessoire portable du premier mode de réalisation et
[Fig 4] représente, schématiquement, un deuxième mode de réalisation particulier de l'ensemble objet de la présente invention comportant un accessoire portable sous forme de bracelet, un outil électroportatif et un accessoire portable supplémentaire.

Dans les figures annexées, les références numériques se rapportent à : 100 un sécateur, exemple particulier d'un outil électroportatif 1 et 2 deux dem i-coques
3 un motoréducteur
4 un corps
5 une carte électronique de commande du motoréducteur
6 une gâchette
7 une carte électronique associée à une antenne
8 une contre-plaque
9 un roulement
10 un écrou
11 une butée à rouleaux
12 un axe
13 une deuxième lame ou contre-lame
14 une première lame ou lame de coupe
15 un pignon engagé avec la première lame
16 une roue conique
17 un pignon conique
18 une antenne associée à la carte électronique 7
200 un bracelet, exemple particulier d'accessoire portable
21 une deuxième carte électronique associée à une antenne
22 une batterie
23 un couvercle
24 une deuxième antenne
300 un bracelet supplémentaire
D1 une distance séparant le sécateur du bracelet et
D2 une distance séparant le sécateur du bracelet supplémentaire.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

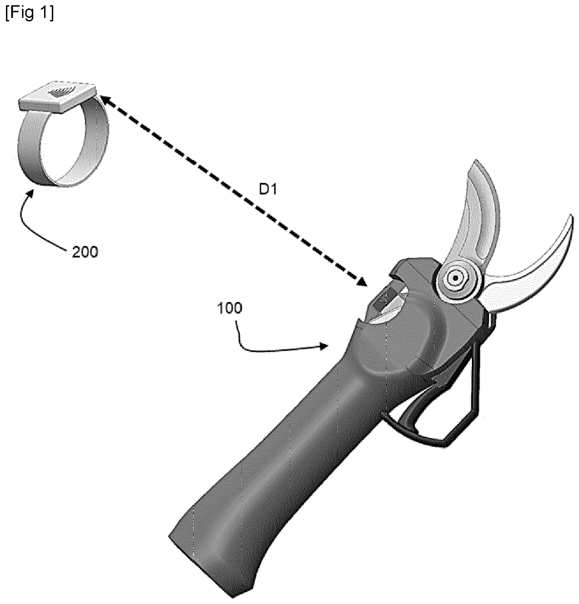

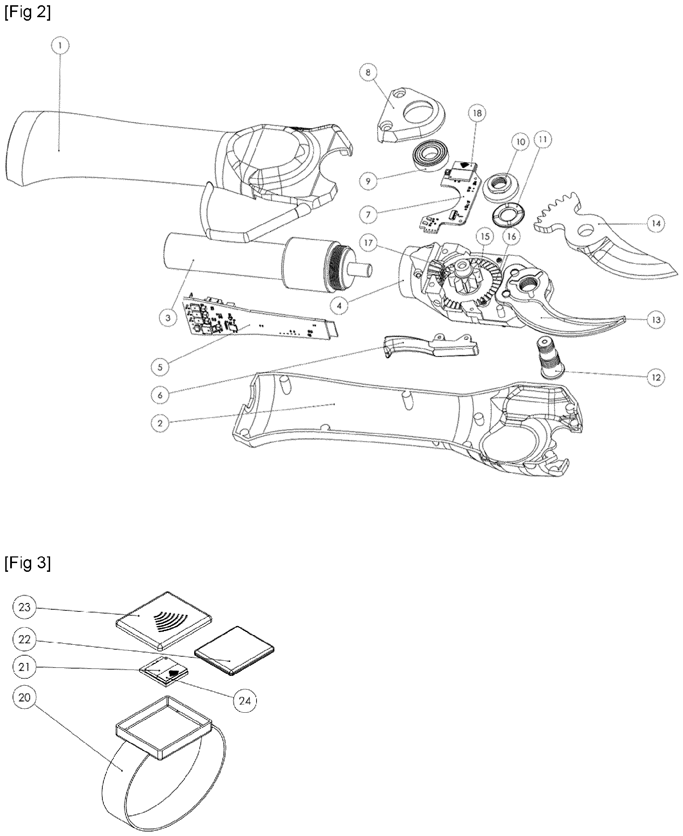

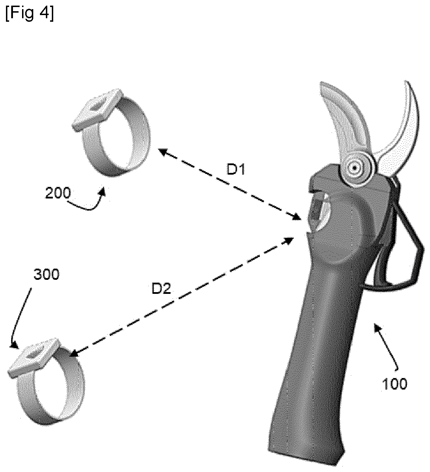

On note, dès à présent, que les figures 1 et 4 ne sont pas à l'échelle que les figures 2 et 3 sont, chacune, à l'échelle mais, qu'entre elles, les échelles varient.

On observe en figure 1, un mode de réalisation particulier d'un ensemble objet de l'invention. Ledit ensemble comporte un sécateur 100 et un bracelet 200.

Dans d'autres modes de réalisation de l'invention (non représentés), d'autres outils électroportatifs comportant un moyen d'entrainement configuré pour déplacer deux lames ou deux mâchoires l'une par rapport à l'autre entre une position ouverte et une position fermée pourront être mis en oeuvre. Par exemple l'outil électroportatif pourra être choisi parmi un outil de coupe de câble, un outil de sertissage, un outil de poinçonnage ou un outil de serrage de vis à tête fusible. Dans d'autres modes de réalisation de l'invention (non représentés), ledit ensemble comporte un accessoire portable choisi parmi un gant ou une bague.

Le bracelet 200 est destiné à être porté par l'utilisateur sur un membre distinct du bras de l'utilisateur portant l'outil. Ainsi, le bracelet 200 pourra être porté au poignet du bras gauche alors que le sécateur 100 est tenu en main droite, ou inversement.

Le sécateur 100 et le bracelet 200 seront mieux compris au regard des figures 2 et 3 qui présentent des vues éclatées du sécateur 100 et du bracelet 200.

Le sécateur 100 comporte une coque formée de deux demi-coques, 1 et 2, et présentant un manche destiné à être tenu en main par l'utilisateur. La coque abrite un moyen d'entrainement qui comporte un motoréducteur 3 relié par l'intermédiaire d'un pignon conique 17, d'une roue conique 16 et d'un pignon 15 engagé avec une lame 14. Ainsi, la lame 14 est mobile en rotation autour d'un axe 12 et son mouvement est motorisé par un moyen d'entrainement comportant ledit motoréducteur 3. La lame 14, mobile en rotation, est aussi appelée lame de coupe.

Préférentiellement, le motoréducteur 3 est un moteur planétaire sans balais, plus communément désigné par le terme anglais « Brushless ». Un tel moteur étant bien connu de l'art antérieur, il n'est pas décrit en détail ici.

Le moteur planétaire sans balais est choisi pour sa capacité supporter des cycles intensifs d'ouverture et fermeture jusqu'à 2,5 millions de cycle en 100 jours le moteur avec une usure minimale du moteur. Préférentiellement, le motoréducteur est pilotable au degré près ce qui permet de régler l'ouverture de la lame dans n'importe quelle position dans la plage d'ouverture. Avantageusement, l'ouverture de la lame de coupe est réajustée à intervalle régulier afin de conserver une ouverture constante malgré les affûtages successifs qui réduise la taille lame de coupe.

Un corps 4 configuré pour être abrité entre les deux demi-coques, 1 et 2, sert de support au pignon conique 17, à la roue conique 16 et au pignon de lame. Une deuxième lame 13 est solidaire du corps 4. La deuxième lame, fixée en place et solidaire au corps, est aussi appelée contre-lame.

Un roulement 9 est inséré dans l'extrémité libre de l'axe du pignon 15 et une contre plaque 8 fixée sur le corps 4 maintien le roulement 9 en place.

L'axe 12 est glissé en travers d'un trou traversant percé dans le corps 4, puis en travers d'un trou fileté aménagé dans la deuxième lame 13, puis en travers d'un trou traversant dans la première lame 14 puis en travers d'une butée à rouleau 11. Enfin, un écrou 10 vient coopérer avec une partie terminale filetée de l'axe et enserrer les éléments précités entre ladite extrémité coopérant avec l'écrou 10 et l'autre extrémité de l'axe comportant une butée en prise avec le corps 4.

Une carte électronique 5, également abritée dans la coque, et comportant un microprocesseur et une mémoire, commande le motoréducteur 3 et par conséquent commande le mouvement de la lame 14. Le sécateur comporte une gâchette 6 positionnée pour être activable facilement par la poigne ou le doigt de l'utilisateur et reliée électroniquement à la carte électronique 5. Sous réserve que les conditions de sécurité propres à l'invention, décrites plus loin, sont respectées, une pression de la gâchette commande le passage en position fermée des lames 14 et 13. On appelle position fermée une position où les deux lames sont en contact ou au moins en partie superposée l'une sur l'autre. On appelle position ouverte une position qui n'est pas une position fermée. On précise que le passage d'une position ouverte à une position fermé peut être opérée par le mouvement d'une seule lame, comme c'est le cas pour le sécateur 100, ou par le mouvement des deux lames.

Le sécateur 100 comporte une première antenne 18 supportée par une deuxième carte électronique 7. Avantageusement, la deuxième carte électronique est fixée sur le corps 4.

Les parties électroniques du sécateur 100 sont préférentiellement alimentées par une batterie rechargeable de 24 à 48V, la batterie pouvant être soit positionnée soit sur le sécateur, soit déportée sur la ceinture ou sur un harnais et raccordée par un cordon d'alimentation électrique.

On se rapporte désormais à la figure 3 qui illustre un bracelet 200 configuré pour être utilisé en association avec le sécateur 100. Le bracelet 200 comporte un bracelet 20 et un corps similaire à un corps de montre abritant une deuxième antenne 24. Ledit corps est fermé par un couvercle 23. Préférentiellement, le bracelet 200 comporte une carte électronique 21 configurée pour émettre ou recevoir un signal à travers la deuxième antenne 24 et/ou pour traiter un tel signal. Préférentiellement, le bracelet 200 comporte une batterie 22 notamment pour alimenter la carte électronique 21. Dans des modes de réalisation (non représentés) le bracelet 200 comporte un affichage configuré pour afficher par exemple des informations relatives au sécateur 100 ou à un protocole de sécurité. Dans des modes de réalisation (non représentés) le bracelet 200 comporte une interface homme-machine, dont la fonction sera décrite plus loin.

Préférentiellement, la batterie 22 est une batterie rechargeable.

L'ensemble objet de l'invention, par exemple formé d'un sécateur 100 et d'un bracelet 100, décrits plus haut, comporte un moyen d'estimation d'une valeur représentative de la distance D1 séparant le bracelet et le sécateur.

La distance D1 entre le sécateur et l'ensemble est déterminée en fonction de la force d'un signal échangé entre une première antenne positionnée sur l'outil électroportatif, et une deuxième antenne positionnée sur l'accessoire portable. Par exemple, l'estimation de la distance D1 est réalisée par un microprocesseur positionné sur le sécateur 100 ou sur le bracelet 200.

Dans des modes de réalisation, la première et la deuxième antenne sont configurées pour échanger un signal émis en radiofréquences, en infrarouge ou un signal selon le standard Bluetooth (marque déposée).

Dans des modes de réalisation (non illustrés), la distance D1 séparant le bracelet 200 et le sécateur 100 est déterminée par calcul d'un temps de transmission entre l'émission d'un signal électromagnétique et la réception dudit signal électromagnétique entre deux émetteurs-récepteurs respectivement positionnés sur le bracelet 200 et sur le sécateur 100. Par exemple, le signal électromagnétique échangé par les deux émetteurs-récepteurs échangent un signal électromagnétique de type ultra-large Bande horodaté au moment de l'envoi du signal, de sorte que la comparaison entre l'heure d'envoi du signal et l'heure enregistré lors de la réception du signal permet de déterminer un temps de transmission.

Ainsi, lors de la mise sous tension du bracelet et en continu lors de son utilisation, l'émetteur-récepteur positionné sur le bracelet émet des trains d'impulsions, suivant une fréquence d'émission paramétrable, dans un volume sphérique autour du bracelet, c'est-à-dire autour du poignet de l'utilisateur. De la même manière, l'émetteur positionné sur le sécateur s'active lors de la mise sous tension du sécateur. La distance entre le bracelet et le sécateur est déterminée par le temps de transmission entre les deux émetteurs-récepteurs L'ensemble ainsi configuré permet de suivre en temps réel le mouvement et la position relative entre les deux émetteurs-récepteurs, et par conséquent entre le sécateur et le poignet de l'utilisateur portant le bracelet, avec une précision au centimètre.

Selon l'invention, les lames du sécateur 100 sont déplacées ou maintenues en position ouverte à moins que chacune des conditions suivantes soient satisfaites :
- la valeur représentative de la distance entre l'accessoire portable et l'outil électroportatif est inférieure à un seuil prédéterminé, dit seuil d'activation,
- la valeur représentative de la distance séparant l'accessoire portable et l'outil électroportatif est supérieure à un seuil prédéterminé, dit seuil de sécurité.

Les lames du sécateur 100 sont déplacées ou maintenues en position ouverte en fonction de la distance entre le sécateur 100 et le bracelet 200. On entend par là qu'une commande d'ouverture est envoyée au motoréducteur si la distance est supérieure au seuil d'activation ou inférieure au seuil de sécurité. Cette commande supplante la commande de fermeture des lames consécutive à une pression sur la gâchette 6, de sorte qu'il n'est pas possible de passer les lames en position fermée lorsque les conditions de sécurité ne sont pas réunies.

Le seuil d'activation et le seuil de sécurité sont paramétrables. Dans des modes de réalisation, une interface homme-machine permet à l'utilisateur du sécateur de régler ces distances.

À titre d'exemple, le seuil d'activation est une valeur de distance comprise entre 1 mètre et 2 mètres préférentiellement comprise entre 1 mètre et 1,5 mètres. À titre d'exemple, le seuil de sécurité est une valeur de distance comprise entre 10 centimètres et 50 centimètres, préférentiellement comprise entre 15 centimètres et 25 centimètres. On note que le seuil d'activation correspond à une distance strictement supérieure au seuil de sécurité.

Dans des modes de réalisation (non représentés), l'accessoire portable comporte un moyen de vérification configuré pour estimer si l'accessoire portable est porté par un utilisateur et les lames ou mâchoires sont déplacées ou conservées en position ouverte à moins que le moyen de vérification estime que l'accessoire portable à la main ou sur l'avant-bras est en effet porté par un utilisateur. Par exemple, le moyen de vérification comporte un accéléromètre positionné sur l'accessoire portable et le moyen de vérification vérifie à intervalles réguliers que les données relevées par ledit accéléromètre correspondent à un usage actif de l'accessoire portable. Le moyen de vérification est par exemple un microprocesseur positionné sur l'accessoire portable.

Par exemple, le moyen de vérification analyse en permanence les données relevées par l'accéléromètre, représentatives des mouvements de l'accessoire portable. Si l'analyse des données par le microprocesseur indiquent que l'accessoire portable n'est pas porté au poignet de l'utilisateur, le moyen de vérification détecte une mauvaise utilisation de l'accessoire portable et met le sécateur en sécurité en immobilisant ou en ouvrant les lames et/ou en émettant une alerte visuelle ou sonore, ou en coupant l'alimentation électrique du sécateur.

Afin d'éviter des mises en sécurité intempestives un délai entre la détection d'une mauvaise utilisation de l'accessoire portable et la mise en sécurité du sécateur pourra être mis en oeuvre, par exemple un délai de 3 secondes, 5 secondes ou 10 secondes.

Ce contrôle de bonne utilisation par le moyen de vérification permet notamment d'éviter que l'accessoire portable ne soit mis dans une poche, ou ailleurs que sur le poignet où l'accessoire portable est un bracelet.

Dans des modes de réalisation (non représentés), l'ensemble comporte une interface homme-machine configurée pour permettre à l'utilisateur de lever temporairement la sécurité décrite plus haut, qui consiste à ouvrir ou à conserver ouvertes les lames ou mâchoires en fonction de la distance entre l'outil électroportatif et l'accessoire portable. Par exemple, une interface du type bouton ou interface tactile est prévue sur l'outil électroportatif ou l'accessoire portable. Alternativement, cette interface peut être distante, par exemple en utilisant l'interface d'un terminal portable communicant de type intelliphone ou tablette tactile, ledit terminable portable communicant étant en connexion sans fil via une antenne avec un processeur positionné sur l'outil électroportatif.

Préférentiellement, les données relatives à l'autorisation de lever temporairement la sécurité sont enregistrées dans une mémoire. Ces données correspondent par exemple à la date et l'heure de l'autorisation et à l'identité de la personne requérant cette autorisation. Préférentiellement, l'autorisation de lever temporairement la sécurité est limitée dans le temps et révoquée lorsque l'outil électroportatif est mis hors tension.

Dans des modes de réalisation (non représentés), l'ensemble objet de l'invention comporte un moyen d'émission d'une alarme sonore ou visuelle positionné sur l'outil électroportatif ou positionné sur l'accessoire portable. Ledit moyen émet une alarme lorsque la valeur représentative de la distance séparant le premier et le deuxième moyen d'émission ou de réception d'un signal électromagnétique est inférieure à un seuil prédéterminé, dit seuil d'alerte.

Par exemple, le seuil d'alerte correspond à une distance comprise entre 10 et 30 centimètres, par exemple le seuil d'alerte correspond à une distance de 20 centimètres. Le seuil d'alarme est préférentiellement compris entre le seuil d'activation et le seuil de sécurité.

Dans des modes de réalisation (non représentés), l'ensemble objet de l'invention comporte un moyen de mesure d'une vitesse de mouvement des mains de l'utilisateur et le seuil de sécurité est déterminé en fonction de la vitesse de mouvement des mains de l'utilisateur. Par exemple, le moyen de mesure d'une vitesse de mouvement des mains de l'utilisateur comporte au moins un accéléromètre positionné sur le bracelet 200 et/ou positionné sur le sécateur 100.

Selon un deuxième mode de réalisation particulier illustré en figure 4, l'ensemble objet de l'invention comporte un outil électroportatif, dans ce cas un sécateur similaire au sécateur 100 déjà décrit plus haut et un accessoire portable, dans ce cas un bracelet similaire au bracelet 200 déjà décrit plus haut et au moins un accessoire portable supplémentaire. L'accessoire supplémentaire étant par exemple un deuxième bracelet 300 destiné à être porté par un deuxième utilisateur, distinct d'un premier utilisateur manipulant le sécateur 100.

Le bracelet 300 supplémentaire comporte une troisième antenne. En outre l'ensemble comporte un moyen d'estimation d'une valeur représentative de la distance D2 séparant le bracelet 300 et le sécateur 100, en fonction de la force d'un signal échangé entre la première antenne positionnée sur le sécateur 100 et une troisième antenne positionnée sur le bracelet supplémentaire 300.

Alternativement, la distance D2 séparant le bracelet 300 et le sécateur 100 est déterminée par calcul d'un temps de transmission entre l'émission d'un signal électromagnétique et la réception dudit signal électromagnétique entre deux émetteurs-récepteurs respectivement positionnés sur le bracelet 300 et sur le sécateur 100.

Avantageusement, les lames ou mâchoires du sécateur 100 sont déplacées ou conservées en position ouverte à moins que la condition supplémentaire suivante soit satisfaite : la valeur représentative de la distance D2 séparant le bracelet supplémentaire et l'outil électroportatif est supérieure à un seuil prédéterminé.

Par exemple, ce seuil correspond à une distance comprise entre 10 et 50 centimètres. Dans ce cas, il est attendu que les deux utilisateurs, un premier portant l'outil et un autre utilisateur, travaillent côte à côte, néanmoins la sécurité du sécateur 100 est engagée lorsque le bracelet 300 porté par le second utilisateur se trouve trop proche du sécateur 100.

Dans un autre exemple, ce seuil correspond à une distance supérieure à un mètre, par exemple comprise entre 1 mètre et 10 mètres. Dans ce cas il n'est pas prévu que les deux utilisateurs travaillent l'un à côté de l'autre et la sécurité du sécateur s'engage dès que les utilisateurs se rapprochent trop l'un de l'autre.

## Revendications

1. Ensemble **caractérisé en ce qu'**il comporte :
- un outil électroportatif (100) comportant un moyen d'entrainement configuré pour déplacer deux lames (13 et 14) ou deux mâchoires entre une position ouverte et une position fermée,
- un accessoire portable (200) destiné à être porté par l'utilisateur sur un membre distinct du bras de l'utilisateur portant l'outil,
- un moyen d'estimation d'une valeur représentative de la distance (D1) séparant l'accessoire portable et l'outil électroportatif
et **en ce que** les lames ou mâchoires sont déplacées ou maintenues en position ouverte à moins que chacune des conditions suivantes soient satisfaites :
- la valeur représentative de la distance (D1) séparant l'accessoire portable et l'outil électroportatif est inférieure à un seuil prédéterminé, dit seuil d'activation,
- la valeur représentative de la distance (D1) séparant l'accessoire portable et l'outil électroportatif est supérieure à un seuil prédéterminé, dit seuil de sécurité.

2. Ensemble selon la revendication précédente, dans lequel la valeur représentative de la distance (D1) séparant l'accessoire portable et l'outil électroportatif est déterminée en fonction de la force d'un signal échangé entre une première antenne (18) positionnée sur l'outil électroportatif et une deuxième antenne (24) positionnée sur l'accessoire portable (200).

3. Ensemble selon la revendication 1, dans la valeur représentative de la distance (D1) séparant l'accessoire portable et l'outil électroportatif est déterminée par calcul d'un temps de transmission entre l'émission d'un signal électromagnétique et la réception dudit signal électromagnétique entre deux émetteurs-récepteurs respectivement positionnés sur l'accessoire portable (200) et sur l'outil électroportatif (100).

4. Ensemble selon la revendication précédente, dans lequel le signal électromagnétique échangé par les deux émetteurs-récepteurs respectivement positionnés sur l'accessoire portable (200) et sur l'outil électroportatif (100) est un signal électromagnétique de type ultra-large Bande (ULB).

5. Ensemble selon l'une quelconque des revendications précédentes, qui comporte un moyen de vérification configuré pour estimer si l'accessoire portable (200) est porté par un utilisateur et dans lequel les lames ou mâchoires sont déplacées ou conservées en position ouverte à moins que le moyen de vérification estime que l'accessoire portable est en effet porté par un utilisateur.

6. Ensemble selon la revendication précédente, dans lequel le moyen de vérification comporte un accéléromètre positionné sur l'accessoire portable (200) et dans lequel le moyen de vérification vérifie à intervalles réguliers que les données relevées par ledit accéléromètre sont représentatives d'un usage actif de l'accessoire portable.

7. Ensemble selon l'une quelconque des revendications précédentes, qui comporte un moyen de mesure d'une vitesse de mouvement d'une main de l'utilisateur et dans lequel le seuil de sécurité est déterminé en fonction de la vitesse de mouvement mesurée.

8. Ensemble selon la revendication précédente, dans lequel le moyen de mesure d'une vitesse de mouvement d'une main de l'utilisateur comporte au moins un accéléromètre positionné sur l'accessoire portable (200) et/ou positionné sur l'outil électroportatif (100).

9. Ensemble selon l'une quelconque des revendications précédentes, qui comporte une interface homme-machine configurée pour permettre à l'utilisateur de lever temporairement la sécurité de sorte que le moyen d'entrainement peut mettre en mouvement l'au moins une lame ou mâchoire vers une position fermée sans vérification préalable des conditions de distance et dans lequel les données relatives à l'autorisation sont enregistrées dans une mémoire.

10. Ensemble selon l'une quelconque des revendications précédentes, qui comporte un moyen d'émission d'une alarme sonore ou visuelle positionné sur l'outil électroportatif (100) ou positionné sur l'accessoire portable (200) et dans lequel ledit moyen émet une alarme lorsque la valeur représentative de la distance séparant le premier et le deuxième moyen d'émission ou de réception d'un signal électromagnétique est inférieure à un seuil prédéterminé, dit seuil d'alerte.

11. Ensemble selon l'une quelconque des revendications précédentes, qui comporte :
- au moins un accessoire portable (300) supplémentaire, ledit accessoire portable supplémentaire comportant une troisième antenne,
- un moyen d'estimation d'une valeur représentative de la distance (D2) séparant l'accessoire portable supplémentaire et l'outil électroportatif, et dans lequel les lames ou mâchoires sont déplacées ou conservées en position ouverte à moins que la condition supplémentaire suivante soit satisfaite :
- la valeur représentative de la distance (D2) séparant l'accessoire portable supplémentaire et l'outil électroportatif est supérieure à un seuil prédéterminé.

12. Ensemble selon l'une quelconque des revendications précédentes dans lequel l'outil électroportatif est choisi parmi : un sécateur, un outil de coupe de câble, un outil de sertissage, un outil de poinçonnage ou un outil de serrage de vis à tête fusible.

13. Ensemble selon l'une quelconque des revendications précédentes, dans lequel l'accessoire portable est un bracelet, une bague ou un gant.

14. Ensemble selon l'une quelconque des revendications précédentes dans lequel l'outil électroportatif est un sécateur (100) comportant une contre-lame (13) et une lame de coupe (14) rendue mobile par un moyen d'entrainement

15. Ensemble selon la revendication précédente, dans lequel le moyen d'entrainement comporte un moteur sans balais, un réducteur planétaire, un couple conique ou spiro-conique et un engrenage engagé avec la lame de coupe.
